# EUROPÄISCHE PATENTANMELDUNG

(11) **EP 1 232 973 A1**
(43) Veröffentlichungstag der Anmeldung: **21.08.2002**
(21) Anmeldenummer: 02090097.3
(22) Anmeldetag: 15.11.2000
(51) Int. Cl.: B65G 47/90, B25J 15/02, B25J 19/06

(54) **Halteeinrichtung, insbesondere für Greifvorrichtungen**

(30) Priorität: 29.11.1999 DE 19958834
(62) Teilanmeldung aus: 00250380.3
(71) Anmelder: Atecs Mannesmann AG, 40213 Düsseldorf (DE)
(72) Erfinder: Ostholt, Rüdiger, 58300 Wetter (DE)
(74) Vertreter: Meissner, Peter E., Dipl.-Ing.

(57) **Zusammenfassung**

Die Erfindung betrifft eine Halteeinrichtung zum Feststellen der Position einer Kolbenstange (9) eines Pneumatikzylinders (8a), der mit einem Fluid einer Druckquelle betrieben wird. Um diese kurzbauend ausführen und einfach an einen Druckzylinder anbauen zu können, wird vorgeschlagen, dass am Pneumatikzylinder (8a) eine erster Lamellenkamm (12) angeordnet ist, dessen Lamellen (14) parallel nebeneinander verlaufen, dass ein entsprechender zweiter Lamellenkamm (13) mit seinen Lamellen (15) in den ersten eingreift, wobei die Lamellen (14, 15) mit ihren Seitenflächen aneinander anliegen, dass die Lamellen (14) des ersten Lamellenkamms (12) an einem Ende mit der Kolbenstange (9) fest verbunden sind, dass ein Hebel (18) seitlich an die Lamellen (14, 15) kraftbeaufschlagbar anlegbar ist, und dass die Kraftbeaufschlagung von einem elastische Element (19) bewirkt wird, das von einem Hilfszylinder (20) vorgespannt ist, der mit dem Fluid derselben Druckquelle betrieben, wobei das elastische Element (19) die Lamellen (14, 15) bei einem Druckabfall derart gegeneinander drückt.

## Beschreibung

Die Erfindung betrifft eine Halteeinrichtung, insbesondere für Greifvorrichtungen, gemäß dem Obergriff des Anspruchs 1.

Für pneumatisch betriebene Greifvorrichtungen, insbesondere Zangengreifer, sind Sperrschaltungen mit Sperrventilen bekannt, die bei Druckabfall einen ausreichenden Betriebsdruck für den Greifer sicherstellen. Außerdem gibt es Anbaubremsen für Greifvorrichtungen mit pneumatischem Zylinder, die bei Druckabfall einen Bremsvorgang auslösen und dabei ein Öffnen der Greifvorrichtung verhindern.

Die bekannten Lösungen führen zu einer erheblichen Vergrößerung der Baulänge des Druck- bzw. Pneumatikzylinders. Darüber hinaus sind Anbaubremsen nicht konstruktiv einfach an einen Druckzylinder beispielsweise eines Greifers nachträglich anbaubar.

Die Aufgabe der Erfindung ist es, eine Haltereinrichtung für Kolbenstangen-Pneumatikzylinder-Einheiten vorzuschlagen, die kurzbauend ist und einfach an den Pneumatikzylinder angebaut werden kann, ohne dessen Einbaulängenmaß zu verändern.

Die Lösung der Aufgabe ist durch die Merkmale des Anspruchs 1 gegeben. Die Merkmale der Unteransprüche beschreiben vorteilhafte Ausgestaltungen der Halteeinrichtung.

Gelöst wird die Aufgabe durch miteinander kämmende Lamellen, die bei Normalbetrieb gegeneinander verschiebbar sind, wobei einer der beiden Lamellenkämme (oder Lamellengruppe) am Pneumatikzylinder fixiert und die andere zu diesem relativ verschiebbaren Lamellenkamm an der Kolbenstange des Pneumatikzylinders befestigt ist. Erst bei Druckabfall wird eine Kraftbeaufschlagung auf die beiden Lamellenkämme ausgelöst, die diese in ihrer jeweiligen Lage zueinander fixiert und damit die Kolbenstange und eine zugehörige Greifvorrichtung in der Greifstellung hält. Das Stellelement sorgt dabei für einen Kraftschluss zwischen den Lamellen, so dass sich die Kolbenstange in Bezug auf den Pneumatikzylinder nicht mehr bewegt. Die Halteeinrichtung ist direkt an den Pneumatikzylinder anbaubar. Durch den modularen Aufbau und durch die veränderliche Anzahl der Lamellen und der Andruckkräfte ist eine maximale Haltekraft einschließlich eines gewünschten Haltekraftverlaufs konstruktiv einfach herstellbar und damit mit geringem Aufwand an jede Greifvorrichtung anpassbar. Die Halteeinrichtung arbeitet reibungs- und verschleißarm und es werden insbesondere keine Querkräfte auf die Kolbenstange ausgeübt. Außerdem erfolgt keine zusätzliche Krafteinleitung in die Gerätekonstruktion.

Konstruktiv einfach ist es, wenn das Stellelement an einem schwenkbaren Doppelhebel angeordnet ist, an dessen einem Ende eine Federkraft und an dessen anderem Ende eine dem Druck des Pneumatikzylinders entsprechende Gegenkraft derart angreift, dass das Stellelement mit einer Kraft gegen die Lamellen drückt, die der Differenz aus der Federkraft und der Gegenkraft entspricht.

Zur Bildung der Gegenkraft wird vorgeschlagen, dass diese durch einen pneumatischen Hilfszylinder mittels einer Kolbenstange dargestellt wird, die am entsprechenden Hebelende anliegt, wobei der Pneumatikhilfszylinder an derselben Druckquelle angeschlossen ist wie der Pneumatikzylinder.

Bei einer einfachen Ausführung ist der Doppelhebel eine dreieckförmige Platte, wobei zwei benachbarte Ecken die beiden Enden des Doppelhebels und die dritte Ecke das nockenartige Stellelement bilden. Die dritte Ecke ragt hierbei als Nocken aus dem Doppelhebel heraus und drückt bei Verschwenken des Doppelhebels gegen die Lamellen.

Zweckmäßigerweise ist die Platte um ihren Flächenmittelpunkt drehbar, da sich auf diese Weise günstige Hebelverhältnisse ergeben.

Ein Ausführungsbeispiel der Erfindung ist in der Zeichnung dargestellt und wird nachfolgend näher beschrieben.
Es zeigen:
- Fig. 1: eine Vorrichtung zum Greifen mit aufgeschnittenem Gehäuse in einer dreidimensionalen Darstellung,
- Fig. 2: eine Draufsicht auf die beiden Pneumatikzylinder der Vorrichtung gemäß Fig. 1,
- Fig. 3: einen vertikalen Querschnitt der Vorrichtung gemäß der Schnittlinie A - A in Fig. 2,
- Fig. 4: einen vertikalen Querschnitt der Vorrichtung gemäß der Schnittlinie B - B in Fig. 2,
- Fig. 5: einen zwischen den beiden Pneumatikzylindern verlaufenden vertikalen Querschnitt gemäß der Schnittlinie C - C in Fig. 6,
- Fig. 6: eine Draufsicht auf die Halteeinrichtung und
- Fig. 7: eine Draufsicht auf die Synchronisiereinrichtung.

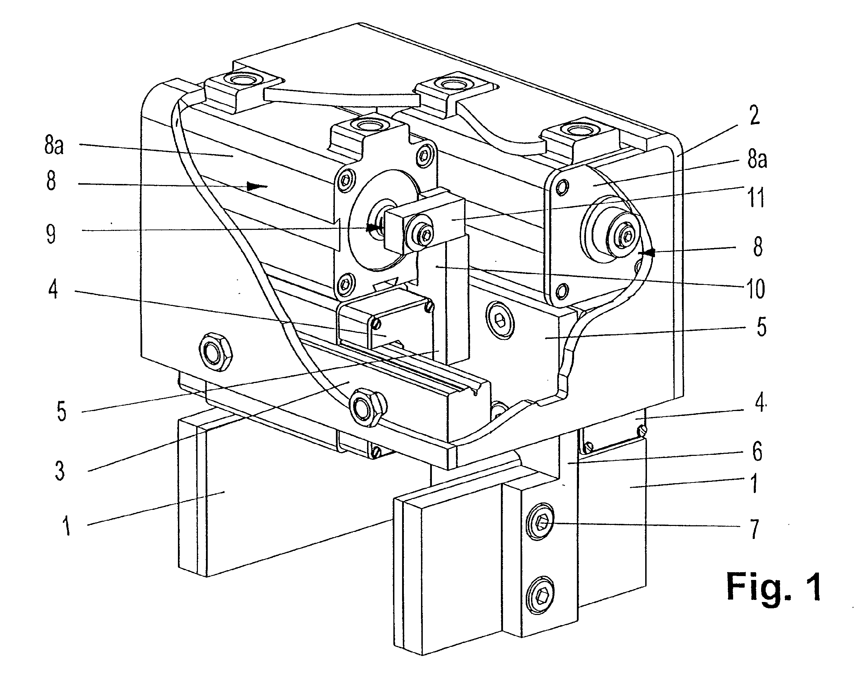

Fig. 1 zeigt eine Vorrichtung zum Greifen von Lasten mit zwei Greifelementen 1 mit einander zugewandten plattenförmigen Klemmbacken, die unterhalb eines Gehäuses 2 aus diesem herausragen. Das Gehäuse 2 ist in dieser dreidimensionalen Darstellung teilweise aufgeschnitten gezeichnet, so dass man zwei Längsträger 3 erkennen kann, die in einer gemeinsamen Ebene parallel angeordnet und als Profilschienen ausgebildet sind. Die Längsträger 3 sind an den Innenseiten zweier gegenüberliegender Seitenwände des Gehäuses 2 angeschraubt. An jedem Längsträger 3 ist ein sich in Längsträgerrichtung erstreckendes Trägerelement 5 längsverschieblich geführt und abgestützt, das jeweils an einem auf dem Längsträger 3 verschiebbaren Laufelement 4 befestigt ist. Die beiden Trägerelemente 5 sind in Längsträgerrichtung gesehen seitlich voneinander beabstandet und über einen Teil der Trägerelementlänge aneinander vorbeibewegbar, so dass sich die Trägerelemente 5 von der Seite gesehen längenmäßig überschneiden.

Die beiden Trägerelemente 5 tragen jeweils an einem ihrer Enden ein angeformtes Anschlusselement 6, das nach unten aus dem Gehäuse 2 herausragt und an dem mittels Schrauben 7 jeweils ein Greifelement 1 befestigt (und damit am Trägerelement 5 abgestützt) ist.

Oberhalb der Längsträger 3 sind Einrichtungen 8 in Form von zwei an den Seitenwänden des Gehäuses 2 befestigten Pneumatikzylindern 8a mit einer längsverschiebbaren Kolbenstange 9 vorgesehen, mittels welcher die beiden Trägerelemente 5 gegenläufig zueinander verschiebbar sind. Die beiden Pneumatikzylinder 8a erstrecken sich oberhalb der Längsträger 3 in deren Längsrichtung, wobei die beiden Kolbenstangen 9 in zueinander entgegengesetzte Richtungen weisen.

Bedingt durch die antiparallele Anordnung der beiden Pneumatikzylinder 8a sieht man diese in Fig. 1 links von vorn und rechts daneben von hinten.

Dem Anschlusselement 6 gegenüberliegend ist am anderen freien Ende jedes Trägerelements 5 ein weiteres, sich nach oben zum Pneumatikzylinder 8a hin erstreckendes Anschlusselement 10 vorhanden, das mit dem Trägerelement 5 und über ein Verbindungsstück 11 mit.der Kolbenstange 9 fest verbunden ist.

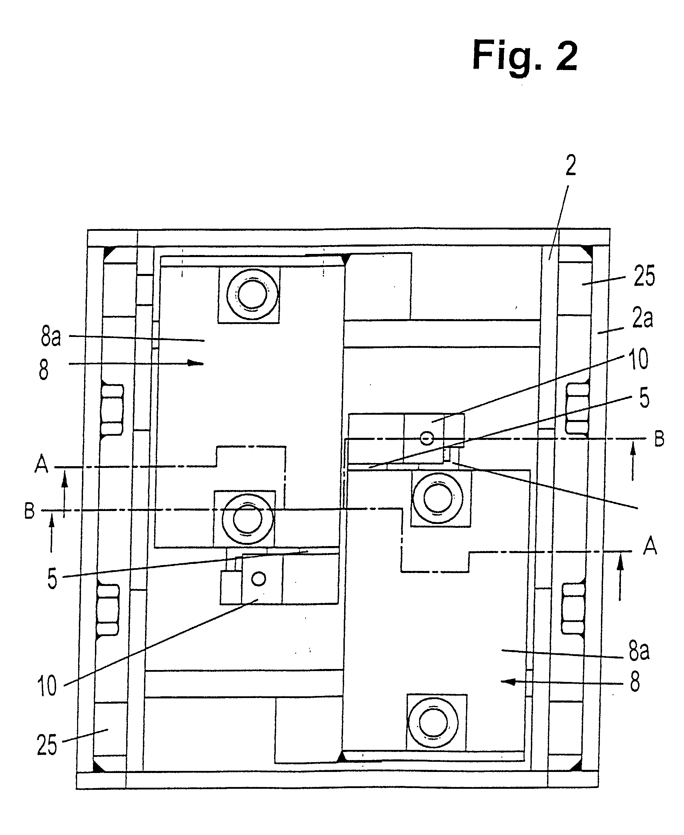

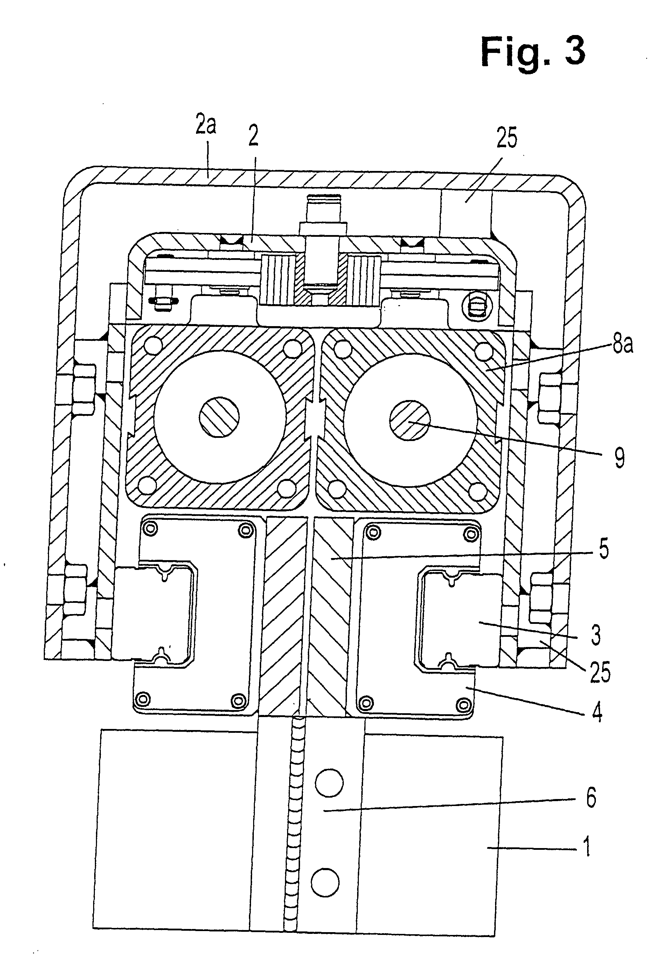

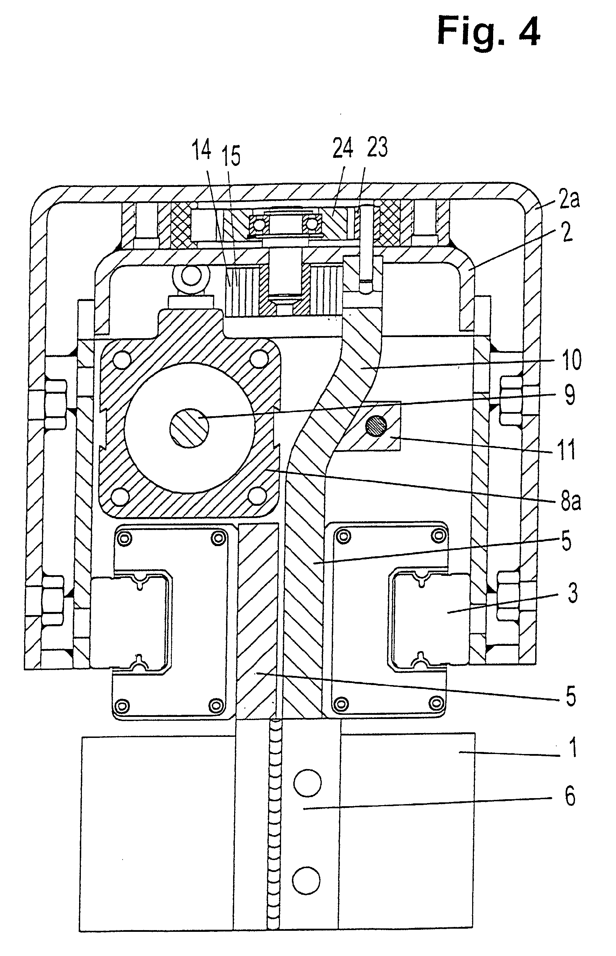

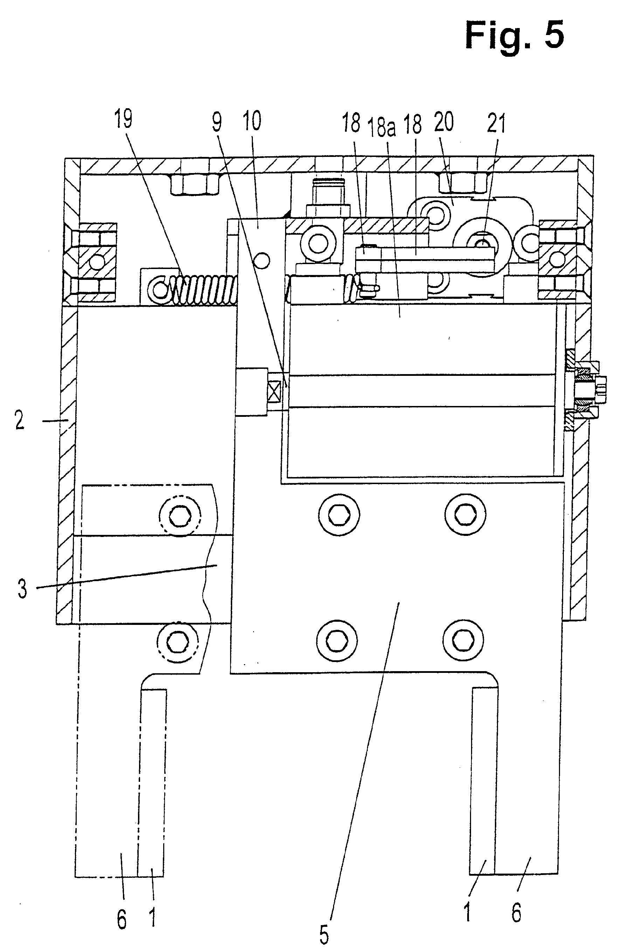

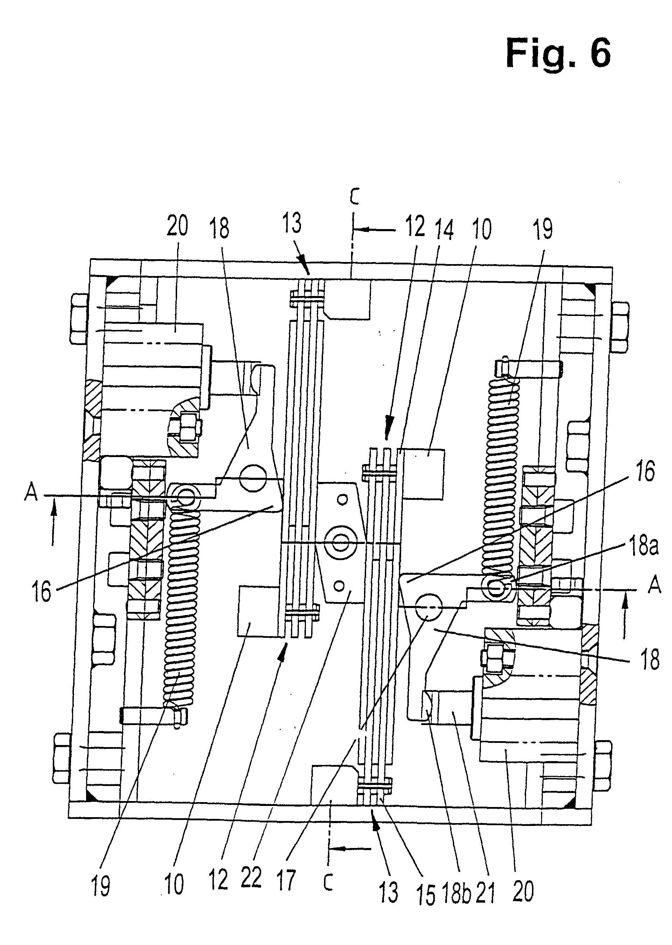

In Fig. 2 ist eine Draufsicht auf die beiden Pneumatikzylinder 8a zu sehen. Die zugehörigen vertikalen Schnitte gemäß den Schnittlinien A - A und B - B zeigen Fig. 3 und 4. Fig. 5 zeigt dagegen einen vertikalen Schnitt (C - C, s. Fig. 6) durch den von den beiden Pneumatikzylindern 8a gebildeten Spalt mit Sicht auf eines der beiden Trägerelemente 5 mit den sich nach oben und unten erstreckenden Anschlusselementen 6 und 10; die Schnittlinie C - C verläuft im wesentlichen senkrecht zu den Schnittlinien A - A und B - B.

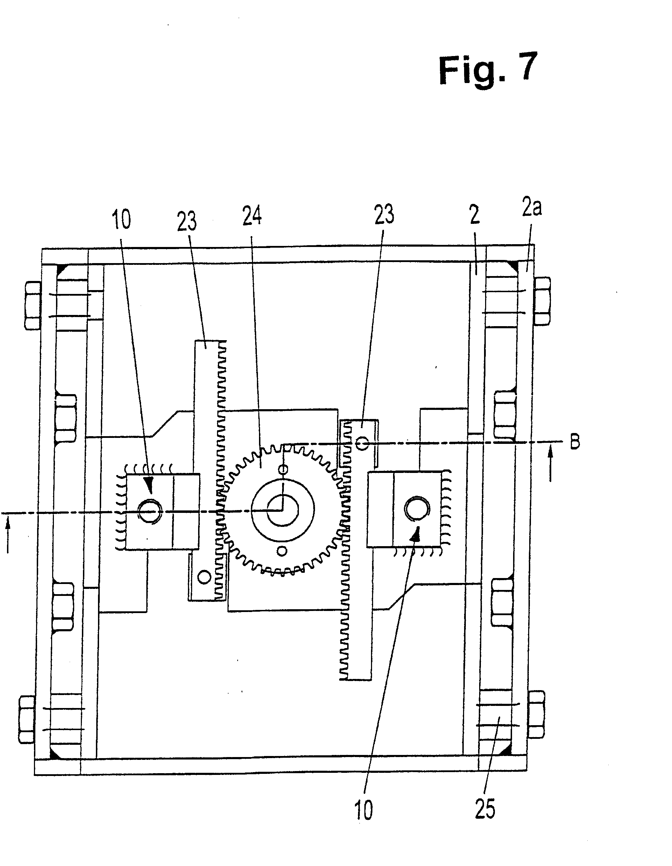

Im Unterschied zu Fig. 1 ist das Gehäuse in Fig. 2 auf zwei gegenüberliegenden Seiten (der rechten und der linken Seite in Fig. 2) doppelwandig ausgebildet. Außerdem befindet sich, wie Fig. 4 und 5 bereits erkennen lassen, oberhalb der beiden Pneumatikzylinder 8a eine Halteeinrichtung (s. insbesondere Fig. 6) und darüber in einer Gehäusekammer angeordnet eine Synchronisiereinrichtung (s. insbesondere Fig. 7), deren Teile zur besseren Übersicht in den Figuren 2 bis 5 teilweise weggelassen worden sind.

Fig. 3 und 4 zeigen die U-förmig ausgebildeten Laufelemente 4, welche die Profilschiene 3 jeweils bis auf die an der Gehäusewand befestigten Seite umfassen. Fig. 3 zeigt insbesondere, dass sich zwischen den beiden aneinander vorbeibewegbaren Trägerelementen 5 ein schmaler Luftspalt befindet. Ein Eingriff der Laufelemente 4 in die Längsnuten der Profilschienen 3 erfolgt mittels im Laufelement 4 umlaufenden Kugeln, die für eine spielfreie Abstützung des Laufelements 4 an der Profilschiene 3 sorgen. Dieser Art der Abstützung nimmt auch Querkräfte und Quermomente auf.

Fig. 5 zeigt die beiden vollständig auseinandergeschobenen Trägerelemente 5 quer zu deren Längserstreckung gesehen. Das zweite Trägerelement 5 (in Fig. 5 das auf der linken Seite dargestellte) ist zum besseren Verständnis miteingezeichnet. Wie Fig. 5 erkennen lässt, sind hierbei die an den beiden Trägerelementen 5 abgestützten Greifelemente 1 an den beiden außen liegenden Enden des Trägerelementpaars angeordnet.

Fig. 6 zeigt die Halteeinrichtung von oben gesehen, die aus zwei ineinandergreifenden Lamellenkämmen 12, 13 besteht, die sich in einer gemeinsamen Horizontalebene befinden. Die Lamellen 14 des Lamellenkamms 12 bestehen aus gleichbeabstandeten parallel zu den Längsträgern 3 verlaufenden flachen Lamellenblechen, die an einem Ende mit dem Anschlusselement 10 verbunden sind.

In den Lamellenkamm 12 greift ein zweiter Lamellenkamm 13 ein, dessen Lamellen 15 ebenfalls aus Lamellenblechen bestehen, so dass die Lamellen 14, 15 seitlich aneinander anliegend gegeneinander längsverschiebbar sind. Der zweite Lamellenkamm 13 ist auf der dem Anschlusselement 6 gegenüberliegenden Seite am Gehäuse 2 befestigt. Auf einer Seite liegt ein Stellelement 16 an den Lamellen 14, 15 an, das um eine Achse 17 schwenkbar gelagert ist. Das Stellelement 16 gehört zu einem schwenkbaren Doppelhebel 18 an dessen einem Ende 18a eine Federkraft einer Feder 19 angreift. An dem anderen gegenüberliegenden Ende 18b des Doppelhebels 18 greift eine dem Druck im Pneumatikzylinder 8a entsprechende Gegenkraft an, die die Feder 19 spannt und so dafür sorgt, dass bei ausreichendem pneumatischem Druck das Stellelement 16 nicht gegen die Lamellen 14, 15 drückt.

Die Gegenkraft wird durch einen pneumatischen Hilfszylinder 20 mit einer Kolbenstange 21 gebildet, deren Ende an dem Hebelende 18b anliegt und den Doppelhebel 18 mit einer entsprechenden Kraft beaufschlagt. Die Grundeinstellung des Doppelhebels 18 ist hierbei derart gewählt, dass die Gegenkraft und die Federkraft sich die Waage halten. Der Hilfszylinder 20 ist hierzu mit derselben Druckquelle verbunden wie der Pneumatikzylinder 8a. Das Stellelement 16 drückt die Lamellen 14, 15 jeweils mit der Differenz dieser beiden Kraftmomente zusammen, wobei die Lamellen 14, 15 auf der dem Stellelement 16 gegenüberliegenden Seite über ein Gegenelement 22 am Gehäuse 2 abgestützt werden. Das Stellglied 16 drückt die Lamellen 14, 15 folglich bei Druckabfall im Pneumatikzylinder 8a so stark zusammen, dass damit die druckabfallbedingte Verringerung der Klemmkraft kompensiert wird. Dies hat zur Folge, dass bei Ausfall des Pneumatikzylinders 8a die Greifelemente 1 weiter zusammengedrückt werden, so dass die gegriffene Last nicht freigegeben wird.

Der Doppelhebel 8 ist als dreieckförmige Platte (Doppelplatte) ausgebildet, wobei zwei benachbarte Ecken die beiden Enden 18a, 18b des Doppelhebels 18 und die dritte abgerundete nockenartige Ecke das Stellelement 16 bilden. Die Platte ist hierbei etwa grob gesehen um ihren Flächenmittelpunkt drehbar.

Fig. 7 zeigt die über der Halteeinrichtung im Gehäuse angeordnete Synchronisiereinrichtung von oben gesehen, die aus zwei parallelen Zahnstangen 23 besteht, deren Zähne aufeinanderzugewandt sind. Die Zahnstangen sind jeweils am Anschlusselement 10 befestigt und werden folglich zusammen mit den Greifelementen 1 verschoben. Zur Synchronisation ihrer gegenläufigen Längsverschiebungen sind beide Zahnstangen über ein zwischen ihnen angeordnetes Zahnrad 24 miteinander verbunden, welches jeweils in die Zahnstangen 23 eingreift.

Insbesondere die Figuren 3 und 4 zeigen, dass das Gehäuse aus zwei ineinandergesteckten, auf einer Seite offenen Gehäusen 2a, 2b besteht, die unter Belassung eines spaltförmigen Freiraums über Distanzstücke 25 miteinander verbunden sind. Im Freiraum sind die Pneumatikleitungen gegen äußere Einflüsse geschützt verlegt (nicht gezeigt).

### Bezugszeichenliste:

- 1: Greifelement
- 2: Gehäuse
- 3: Längsträger
- 4: Laufelement
- 5: Trägerelement
- 6: Anschlusselement
- 7: Schraube
- 8: Einrichtung
- 8a: Pneumatikzylinder
- 9: Kolbenstange
- 10: Anschlusselement
- 11: Verbindungsstück
- 12: Lamellenkamm
- 13: Lamellenkamm
- 14: Lamelle
- 15: Lamelle
- 16: Stellelement
- 17: Achse
- 18: Doppelhebel
- 18a: Hebelende
- 18b: Hebelende
- 19: Feder
- 20: pneumatischer Hilfszylinder
- 21: Kolbenstange
- 22: Gegenelement
- 23: Zahnstange
- 24: Zahnrad
- 25: Distanzstück

## Patentansprüche

1. Halteeinrichtung zum Feststellen der Position einer Kolbenstange (9) eines Pneumatikzylinders (8a),
in dem ein mit der Kolbenstange (9) fest verbundener Kolben längsverschieblich angeordnet ist und der mit einem Fluid einer Druckquelle betrieben wird, wobei das freie Ende der Kolbenstange (9) aus dem Pneumatikzylinder (8a) herausragt,
**dadurch gekennzeichnet,**
**dass** am Pneumatikzylinder (8a) eine erster Lamellenkamm (12) angeordnet ist, dessen Lamellen (14) unter Belassung jeweils eines Zwischenraums parallel nebeneinander verlaufen,
**dass** ein entsprechender zweiter Lamellenkamm (13) mit seinen Lamellen (15) in den ersten Lamellenkamm (12) eingreift, wobei die Lamellen (14, 15) der beiden Lamellenkämme (12, 13) mit ihren Seitenflächen aneinander anliegen,
**dass** die Lamellen (14) des ersten Lamellenkamms (12) an einem Ende mit der Kolbenstange (9) fest verbunden und somit zusammen mit der Kolbenstange (9) längsverschiebbar sind,
**dass** ein Hebel (18) mit einem freien Ende (16) seitlich an einer der beiden außenliegenden Lamellen (14 oder 15) kraftbeaufschlagbar anlegbar ist, und dass die Kraftbeaufschlagung von einem elastischen Element (19) bewirkt wird, das von einem Hilfszylinder (20) vorgespannt ist, der mit dem Fluid derselben Druckquelle betrieben wird wie der Druckzylinder (8a), wobei das elastische Element (19) die Lamellen (14, 15) bei einem Druckabfall derart gegeneinander drückt, dass die Lamellen (14, 15) in ihrer jeweiligen Stellung reibschlüssig fixiert werden.

2. Vorrichtung nach Anspruch 1,
**dadurch gekennzeichnet,**
**dass** das Stellelement (16) an einem schwenkbaren Doppelhebel (18) vorgesehen ist, an dessen einem Ende (18a) eine Federkraft und an dessen anderem Ende (18b) eine dem Druck im Pneumatikzylinder (8a) entsprechende Gegenkraft derart angreift, dass das Stellelement (16) mit einer seitlich gegen die Lamellen (14, 15) gerichteten Kraft drückt, die der Differenz aus der Federkraft und der Gegenkraft entspricht.

3. Vorrichtung nach Anspruch 1 oder 2,
**dadurch gekennzeichnet,**
**dass** die Gegenkraft durch einen pneumatischen Hilfszylinder (20) mittels einer Kolbenstange (21) gebildet ist, die am entsprechenden Hebelende (18b) anliegt, wobei der Pneumatikhilfszylinder (20) mit derselben Druckquelle verbunden ist wie der Pneumatikzylinder (8a).

4. Vorrichtung nach einem der Ansprüche 2 oder 3,
**dadurch gekennzeichnet,**
**dass** der Doppelhebel (18) eine dreieckförmige Platte ist, wobei zwei benachbarte Ecken die beiden Enden (18a, 18b) des Doppelhebels (18) und die dritte Ecke das Stellelement (16) bilden.

5. Vorrichtung nach Anspruch 4,
**dadurch gekennzeichnet,**
**dass** die Platte um ihren Flächenmittelpunkt drehbar ist.
